# FASCICULE DE BREVET EUROPEEN

(11) **EP 2 007 119 B1**
(45) Date de publication et mention de la délivrance du brevet: **03.05.2017**
(21) Numéro de dépôt: 08290577.9
(22) Date de dépôt: 18.06.2008
(51) Int. Cl.: H04M 1/56, H04M 15/06, H04M 1/247, H04M 3/42

(54) **Système et procédé de gestion de l'identification de l'opérateur du numéro d'appel d'un correspondant au niveau du terminal d'un ordinateur**
System und Verfahren zur Verwaltung der Identifizierung des Betreibers der Rufnummer eines Teilnehmers an einem Computerterminal
System and method of managing the identification of the operator of the call number of a correspondent in the terminal of a computer

(30) Priorité: 21.06.2007 FR 0704439
(43) Date de publication de la demande: 24.12.2008
(73) Titulaire: SOCIETE FRANCAISE DU RADIO TELEPHONE (SFR), 75015 Paris (FR)
(72) Inventeur: Faizy, Christian, 97417 La Montagne (FR)
(74) Mandataire: Debay, Yves

(56) Documents cités:
- EP-A- 0 818 913
- US-A1- 2003 179 857
- US-A1- 2007 127 653

## Description

La présente invention se rapporte au domaine des systèmes d'identification des opérateurs ou des fournisseurs d'accès téléphoniques et plus particulièrement au domaine des systèmes de gestion de l'identification de l'opérateur ou du fournisseur d'accès Internet qui gère les communications téléphoniques d'un correspondant et de l'association d'un élément d'identification de l'opérateur ou du fournisseur d'accès au numéro d'un correspondant.

Il est courant que les opérateurs téléphoniques proposent des offres promotionnelles qui incitent à multiplier les appels vers des correspondants utilisant le même opérateur. La réalisation d'appels internes au réseau de l'opérateur se trouve alors facturée de façon nettement avantageuse par rapport à des appels effectués vers l'extérieur du réseau, c'est-à-dire vers des correspondants qui utilisent un opérateur téléphonique différent de celui de l'utilisateur. Pour l'utilisateur qui souhaite profiter pleinement de ce type d'offre dite « *on net* », il est impératif qu'il soit en mesure de connaître les opérateurs de ses différents correspondants.

Actuellement, une solution connue pour un utilisateur de téléphonie mobile qui souhaite remédier à ce problème consiste à se renseigner auprès de chacun de ses correspondants pour connaître l'opérateur qu'ils utilisent respectivement puis de faire en sorte de les apprendre par coeur pour pouvoir s'en souvenir. Une autre solution connue notamment par la demande US 2003/0179857 consiste à équiper les réseaux, d'une part, de moyens de vérification de la concordance de souscription de l'appelant et de l'appelé à un même service et d'autre part, de serveurs vocaux ou de tonalités pour avertir l'appelant que l'appelé a souscrit aux mêmes services. Cependant, ce type de solution présente les inconvénients de requérir l'intervention de ces équipements du réseau à chaque établissement de communication, notamment en ne permettant pas d'enregistrer l'information concernant la souscription ni concernant les opérateurs au niveau du terminal appelant et de ne pas prévoir d'avertir l'appelant, notamment en ne permettant pas d'enregistrer l'information au niveau du terminal appelé. La présente invention a pour objectif de proposer un système qui permette, notamment, d'une part de fournir un service de renseignement automatique sur l'opérateur ou le fournisseur d'accès Internet proposant au moins un service de téléphonie utilisé par le terminal d'un correspondant et d'autre part d'assurer la gestion de ce service de renseignement.

Cet objectif est atteint grâce à un système de gestion de l'identification de l'opérateur ou du fournisseur d'accès Internet proposant au moins un service de téléphonie d'au moins un numéro d'appel d'un correspondant de l'utilisateur d'un terminal connecté à au moins un réseau de communication et/ou à un réseau sémaphore, caractérisé en ce que, le terminal comprenant au moins une application logicielle destinée au moins à la récupération et/ou à l'affichage d'au moins un élément d'identification et au moins un dispositif d'affichage, le système comprend au moins un dispositif de filtrage d'au moins un signal d'informations transmis lors de l'établissement d'une communication téléphonique comprenant au moins un moyen de vérification du signal transmis associé à un moyen de transfert du signal d'information et à un moyen de ségrégation d'une partie du signal d'information transmis, cette information comprenant au moins un élément d'identification de l'opérateur du numéro d'appel du terminal du correspondant.

Selon une variante de l'invention, le système de gestion de l'identification de l'opérateur ou du fournisseur d'accès Internet d'au moins un numéro d'appel est caractérisé en ce que l'information transmise comprenant un élément d'identification de l'opérateur du numéro d'appel du terminal du correspondant est associée à un élément d'identification du numéro d'appel du terminal du correspondant et/ou un élément d'identification du terminal du correspondant.

Selon une autre variante de l'invention, le système de gestion de l'identification de l'opérateur ou du fournisseur d'accès Internet d'au moins un numéro d'appel est caractérisé en ce que l'élément d'identification de l'opérateur du terminal du correspondant et l'élément d'identification du numéro d'appel du terminal du correspondant et/ou un élément d'identification du terminal du correspondant sont regroupés dans une même séquence d'informations comprenant un en-tête d'encapsulation.

Selon une autre variante de l'invention, le système de gestion de l'identification de l'opérateur ou du fournisseur d'accès Internet d'au moins un numéro d'appel est caractérisé en ce que les dispositifs de filtrage, de vérification et de ségrégation, sont situés sur un réseau utilisé pour la transmission d'au moins un élément d'identification.

Selon une autre variante de l'invention, le système de gestion de l'identification de l'opérateur ou du fournisseur d'accès Internet d'au moins un numéro d'appel est caractérisé en ce que le dispositif de filtrage et de vérification est situé sur le réseau au niveau d'un H.L.R. (*Home Location Register*) et que le dispositif de ségrégation vient se situer au niveau d'un I.N. *(Intelligent Network*).

Selon une autre variante de l'invention, le système de gestion de l'identification de l'opérateur ou du fournisseur d'accès Internet d'au moins un numéro d'appel est caractérisé en ce que le dispositif de vérification comprend au moins un moyen d'investigation dans au moins une base de données comprenant une table de correspondance entre un numéro d'identification du terminal destiné à recevoir le signal d'information et une autorisation de réception de l'élément d'identification de l'opérateur du numéro d'appel du terminal du correspondant.

Selon une autre variante de l'invention, le système de gestion de l'identification de l'opérateur ou du fournisseur d'accès Internet d'au moins un numéro d'appel est caractérisé en ce que les dispositifs de filtrage, de vérification et de ségrégation, sont situés au niveau du terminal de l'utilisateur, le dispositif de vérification comprenant au moins une application paramétrée et destinée à autoriser ou interdire la récupération et/ou l'utilisation de l'élément d'identification de l'opérateur du numéro d'appel d'un correspondant par une autre application ou un autre interface que le dispositif de ségrégation du terminal destinataire.

Selon une autre variante de l'invention, le système de gestion de l'identification de l'opérateur ou du fournisseur d'accès Internet d'au moins un numéro d'appel est caractérisé en ce que le dispositif de ségrégation comprend au moins un moyen de reconnaissance de l'élément d'identification de l'opérateur du numéro d'appel du terminal d'un correspondant susceptible d'être intégré dans une séquence d'informations comprenant au moins un élément d'identification, et un moyen de suppression de l'élément d'identification de l'opérateur du numéro d'appel du terminal du correspondant.

Selon une autre variante de l'invention, le système de gestion de l'identification de l'opérateur ou du fournisseur d'accès Internet d'au moins un numéro d'appel est caractérisé en ce que l'application logicielle destinée au moins à la récupération de l'élément d'identification de l'opérateur du numéro d'appel du terminal du correspondant au niveau du terminal destinataire du signal d'informations est une application S.T.K. (*Sim Tool Kit*).

Selon une autre variante de l'invention, le système de gestion de l'identification de l'opérateur ou du fournisseur d'accès Internet d'au moins un numéro d'appel est caractérisé en ce que l'application logicielle destinée au moins à la récupération de l'éléments d'identification de l'opérateur du numéro d'appel du terminal du correspondant, gère au moins un moyen d'investigation dans un moyen de mémoire intégré ou associé au terminal de l'utilisateur destinataire du signal, le moyen de mémoire comprenant au moins une table de correspondance entre des éléments d'identification d'opérateurs et des identifiants destinés à être affichés.

Selon une autre variante de l'invention, le système de gestion de l'identification de l'opérateur ou du fournisseur d'accès Internet d'au moins un numéro d'appel est caractérisé en ce qu'au moins le terminal destinataire ou le dispositif de ségrégation comprennent au moins un moyen de dés-encapsulation et/ou de ré-encapsulation, de décodage et/ou d'encodage d'au moins une partie de l'élément d'identification de l'opérateur du numéro d'appel du terminal du correspondant afin qu'au moins une application et/ou une interface du terminal destinataire et/ou du dispositif de ségrégation puissent utiliser l'élément d'identification de l'opérateur du numéro d'appel du terminal du correspondant.

Selon une autre variante de l'invention, le système de gestion de l'identification de l'opérateur ou du fournisseur d'accès Internet d'au moins un numéro d'appel est caractérisé en ce que terminal destinataire comprend un moyen de mémorisation qui intègre au moins une base de données comprenant une correspondance entre au moins un élément d'identification de l'opérateur du numéro d'appel du terminal d'un correspondant, un élément d'identification du numéro d'appel du terminal du même correspondant et/ou un élément d'identification du terminal du même correspondant dans une base de données, les éléments d'identification respectifs étant adaptés à un stockage dans la mémoire du moyen de mémorisation.

Un autre objectif de la présente invention est de proposer un procédé qui permette un fonctionnement optimal d'un système selon l'invention afin d'assurer notamment la gestion du service d'identification.

Cet objectif est atteint grâce à un procédé de gestion de l'identification de l'opérateur ou du fournisseur d'accès Internet d'au moins un numéro d'appel, le procédé mettant en jeu un système de gestion de l'identification de l'opérateur d'au moins un numéro d'appel du terminal d'un correspondant de l'utilisateur d'un terminal connecté à au moins un réseau, le terminal de l'utilisateur intégrant au moins une application logicielle destinée à la récupération et/ou à l'affichage d'au moins un élément d'identification, le système comprenant au moins un dispositif de filtrage d'au moins un signal d'informations qui intègre au moins un élément d'identification de l'opérateur du numéro d'appel du terminal du correspondant transmis lors de l'établissement d'une communication téléphonique, caractérisé en ce que, au moins un signal d'informations comprenant un élément d'identification de l'opérateur du numéro d'appel du terminal d'un correspondant étant émis à destination du terminal d'un utilisateur, le procédé comprend au moins :
- une étape de vérification d'un signal comprenant au moins l'élément d'identification de l'opérateur du numéro d'appel du terminal du correspondant au niveau d'un dispositif de filtrage,
- une étape de transfert du signal vérifié vers un dispositif de ségrégation du signal transmis, et/ou
- une étape de transfert du signal vérifié vers une application logicielle du terminal de l'utilisateur.

Selon une variante de l'invention, le procédé de gestion de l'identification de l'opérateur ou du fournisseur d'accès Internet d'au moins un numéro d'appel est caractérisé en ce que, le signal comportant un élément d'identification de l'opérateur du numéro d'appel du terminal d'un correspondant étant reçu au niveau d'un dispositif de filtrage situé sur un réseau du système, l'étape de vérification du signal au niveau du moyen de vérification d'un dispositif de filtrage comprend :
- une étape de reconnaissance d'un élément d'identification du terminal destinataire du signal,
- une étape de détermination d'une autorisation de transmission de l'élément d'identification de l'opérateur du numéro d'appel du terminal du correspondant au terminal de l'utilisateur destinataire du signal faisant intervenir un moyen d'investigation dans une base de données intégrant au moins une table de correspondance entre un élément d'identification du terminal destinataire et une autorisation ou une interdiction de transmission de l'élément d'identification de l'opérateur du correspondant au terminal destinataire,
- une étape de transmission du signal vers un dispositif de ségrégation dans le cas d'une interdiction de transmission, ou
- une étape de transmission du signal vers une application du terminal de l'utilisateur, destinataire du signal, dans le cas d'une autorisation de transmission.

Selon une autre variante de l'invention, le procédé de gestion de l'identification de l'opérateur ou du fournisseur d'accès Internet d'au moins un numéro d'appel est caractérisé en ce que, le signal d'un élément d'identification de l'opérateur du numéro d'appel d'un correspondant étant reçu au niveau d'un dispositif de filtrage intégré au terminal de l'utilisateur, l'étape de vérification du signal au niveau du moyen de vérification d'un dispositif de filtrage comprend :
- une étape de reconnaissance d'au moins un élément d'identification de l'opérateur du numéro d'appel du terminal du correspondant,
- une étape d'établissement par une application paramétrée et destinée à autoriser ou interdire la récupération et/ou l'utilisation de l'élément d'identification de l'opérateur du numéro d'appel du terminal d'un correspondant par une autre application ou un autre interface que le dispositif de ségrégation du terminal,
- une étape de transmission du signal vers un dispositif de ségrégation dans le cas d'une interdiction de transmission, ou
- une étape de transmission du signal vers une seconde application du terminal de l'utilisateur, destinataire du signal, dans le cas d'une autorisation de transmission.

Selon une autre variante de l'invention, le procédé de gestion de l'identification de l'opérateur ou du fournisseur d'accès Internet d'au moins un numéro d'appel est caractérisé en ce que, le signal vérifié comportant un élément d'identification de l'opérateur du numéro d'appel d'un correspondant étant reçu au niveau d'un dispositif de ségrégation, le procédé comprend :
- une étape de reconnaissance d'au moins un élément d'identification de l'opérateur du numéro d'appel du terminal du correspondant dans le signal,
- une étape d'élimination de l'élément d'identification de l'opérateur du numéro d'appel du correspondant,
- une étape de transfert du signal restant vers une application du terminal de l'utilisateur, destinataire du signal.

Selon une autre variante de l'invention, le procédé de gestion de l'identification de l'opérateur ou du fournisseur d'accès Internet d'au moins un numéro d'appel est caractérisé en ce que, l'élément d'identification de l'opérateur du terminal du correspondant étant regroupé avec au moins un autre élément d'identification du correspondant dans une même séquence d'information comprenant un en-tête d'encapsulation, le procédé comprend :
- une étape de dés-encapsulation du signal qui est réalisée avant l'élimination de l'élément d'identification de l'opérateur du numéro d'appel du terminal d'un correspondant,
- une étape de ré-encapsulation du signal qui est réalisée une fois que l'élimination de l'élément d'identification de l'opérateur du numéro d'appel du terminal d'un correspondant est terminée et avant que le signal ne soit transféré.

Selon une autre variante de l'invention, le procédé de gestion de l'identification de l'opérateur ou du fournisseur d'accès Internet d'au moins un numéro d'appel est caractérisé en ce que, le signal comportant au moins un élément d'identification de l'opérateur du numéro d'appel du terminal d'un correspondant étant reçu au niveau d'une application du terminal destinataire, le procédé comprend :
- une étape de reconnaissance d'au moins un élément d'identification de l'opérateur du numéro d'appel du terminal du correspondant dans le signal,
- une étape d'affichage de l'identifiant de l'opérateur.

Selon une autre variante de l'invention, le procédé de gestion de l'identification de l'opérateur ou du fournisseur d'accès Internet d'au moins un numéro d'appel est caractérisé en ce que, l'élément d'identification de l'opérateur du correspondant étant regroupé avec au moins un autre élément d'identification du correspondant dans une même séquence d'information comprenant un en-tête d'encapsulation, le procédé comprend :
- une étape de dés-encapsulation du signal, et/ou
- une étape de décodage et/ou d'encodage de l'élément d'identification de l'opérateur du numéro d'appel du terminal d'un correspondant de façon à obtenir un identifiant de l'opérateur adapté pour être utilisé par au moins une application et/ou une interface du terminal destinataire.

Selon une autre variante de l'invention, le procédé de gestion de l'identification de l'opérateur ou du fournisseur d'accès Internet d'au moins un numéro d'appel est caractérisé en ce que le procédé comprend :
- une étape d'investigation dans au moins une base de données qui comprend au moins une table de correspondance entre des éléments d'identification d'opérateurs et des identifiants destinés à être affichés.

Selon une autre variante de l'invention, le procédé de gestion de l'identification de l'opérateur ou du fournisseur d'accès Internet d'au moins un numéro d'appel est caractérisé en ce que, le signal étant reçu au niveau d'une application du terminal et comportant au moins un élément d'identification de l'opérateur du numéro d'appel du terminal d'un correspondant et au moins un élément d'identification du numéro d'appel du terminal du même correspondant, le procédé comprend :
- une étape de mémorisation de la correspondance entre l'élément d'identification de l'opérateur du numéro d'appel du terminal d'un correspondant et l'élément d'identification du numéro d'appel du terminal du correspondant dans une base de données, les éléments d'identification respectifs étant adaptés à un stockage dans un moyen de mémorisation.

Selon une autre variante de l'invention, le procédé de gestion de l'identification de l'opérateur ou du fournisseur d'accès Internet d'au moins un numéro d'appel est caractérisé en ce que, le signal d'informations étant reçu au niveau d'une application du terminal et comportant au moins un élément d'identification de l'opérateur du numéro d'appel du terminal d'un correspondant et au moins un élément d'identification du numéro d'appel du terminal du même correspondant et/ou au moins un élément d'identification du terminal du même correspondant, le procédé comprend :
- une étape de vérification dans une base de données que la correspondance entre ces différents éléments d'identification est identique,
- une étape de modification de la correspondance dans la base de données entre les différents éléments d'identification en fonction de la nouvelle correspondance fournie par le signal d'informations.

Selon une autre variante de l'invention, le procédé de gestion de l'identification de l'opérateur ou du fournisseur d'accès Internet d'au moins un numéro d'appel est caractérisé en ce que, le procédé comprend une étape de mise à jour d'au moins une table de correspondance du terminal de l'utilisateur entre des éléments d'identification d'opérateurs et des identifiants destinés à être affichés qui comprend :
- une étape de réception d'un signal comprenant au moins un élément d'identification de l'opérateur du numéro d'appel d'un correspondant associé à un nouvel identifiant à afficher,
- une étape de mémorisation dans la table de correspondance de l'élément d'identification de l'opérateur et du nouvel identifiant de l'opérateur correspondant, lorsque l'opérateur n'existe pas encore dans la table de correspondance, ou
- une étape de modification de la table de correspondance au niveau de la correspondance entre l'élément d'identification de l'opérateur et le nouvel identifiant de l'opérateur correspondant, lorsque l'opérateur existe déjà dans la table de correspondance et que l'identifiant est nouveau.

L'invention, avec ses caractéristiques et avantages, ressortira plus clairement à la lecture de la description faite en référence aux dessins annexés dans lesquels :

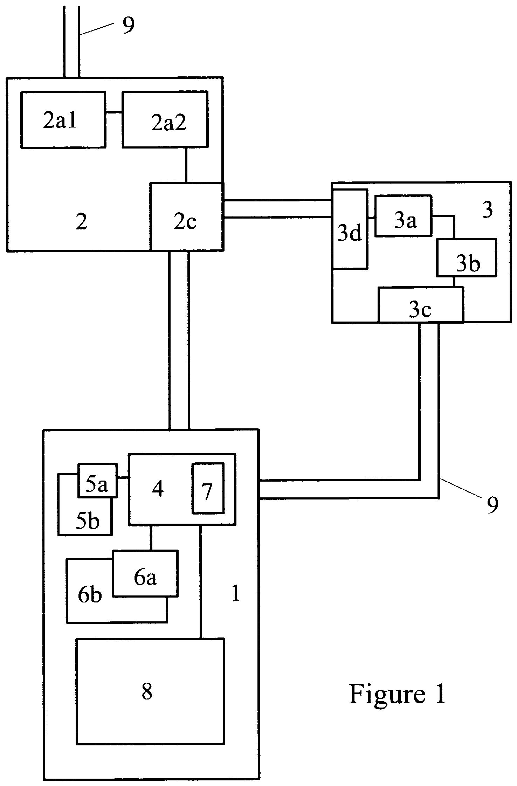

- la figure 1 représente le schéma d'une variante de mise en place du système de gestion de l'identification selon l'invention,

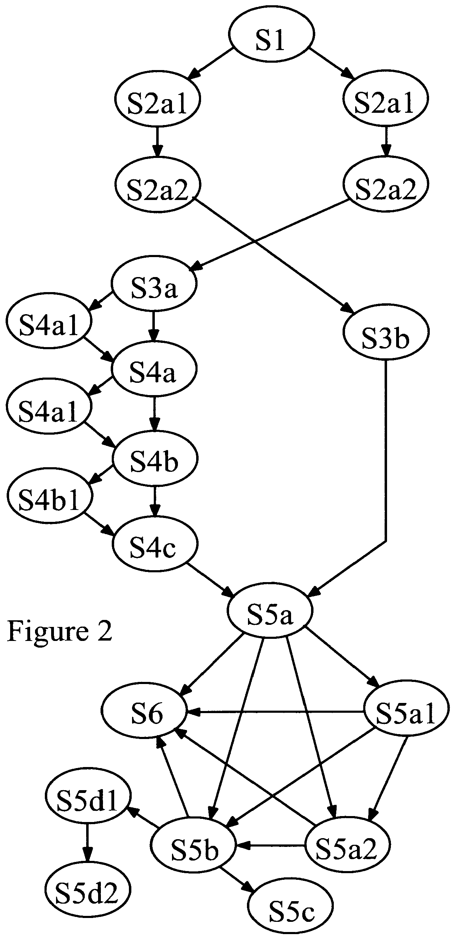

- la figure 2 représente un schéma des différentes étapes d'une variante du procédé de fonctionnement d'un système de l'invention.

Dans l'ensemble du document, le terme « opérateur » doit être compris dans un sens large. C'est ainsi qu'il est relatif aussi bien à des opérateurs de téléphonie, fixe ou mobile, qu'à des fournisseurs d'accès Internet qui proposent un ou plusieurs services de téléphonie ou bien encore à des opérateurs de radiomessagerie.

Le système de gestion de l'identification de l'opérateur d'un numéro d'appel de l'invention permet à un utilisateur de recevoir automatiquement au niveau de son terminal (1) au moins une information d'identification de l'opérateur utilisé par le numéro d'appel du terminal d'un correspondant. Ce système de gestion permet notamment à un premier opérateur de fournir ce service d'identification des opérateurs des numéros d'appel de correspondants au niveau de différents terminaux gérés par le premier opérateur et qui ont souscrit à ce service.

Le système de l'invention comprend un terminal (1) connecté à un réseau (9) géré par un opérateur et par lequel le terminal (1) reçoit un élément identifiant de l'opérateur du terminal d'un correspondant. Bien que l'élément identifiant puisse être transmis à n'importe quel moment et depuis n'importe quelle interface adaptée, serveur ou autre, cet élément identifiant de l'opérateur du numéro d'appel du terminal d'un correspondant est préférentiellement transmis au terminal (1) d'un utilisateur lors de l'établissement d'une communication téléphonique effectuée depuis le terminal d'un correspondant. Au niveau du terminal, la réception de l'élément d'identification de l'opérateur entraîne un affichage (S6) d'un identifiant de l'opérateur, cet identifiant pouvant être par exemple un pictogramme particulier ou le bien encore plus simplement le nom de l'opérateur. Lorsque le dispositif de filtrage est positionné sur le réseau (9), le dispositif de vérification (2) se trouve préférentiellement situé au niveau du H.L.R. (*Home Location Registrer*) tandis que le dispositif de ségrégation est situé au niveau d'un I.N. (*Intelligent Network*).

Cet élément d'identification est transmis jusqu'au terminal (1) de l'utilisateur au niveau d'un réseau (9) qui peut être aussi bien le réseau de communication ou bien un réseau parallèle, spécifique à la signalisation du réseau de communication, appelé réseau sémaphore. Sur ce réseau (9) viennent se positionner plusieurs dispositifs qui participent à la gestion de l'identification d'un opérateur notamment en réalisant un filtrage des informations transmises par le réseau.

Cet ensemble de filtrage comprend tout d'abord un premier dispositif formé par un dispositif de vérification (2) dont le but est de contrôler que la transmission des éléments d'identifications d'opérateurs de correspondants est autorisée vers le terminal (1) d'un utilisateur. Ce dispositif de vérification (2) comprend un moyen de reconnaissance (2a1) dans le signal transmis, d'une part d'un élément d'identification de l'opérateur du numéro d'appel d'un correspondant et d'autre part d'un élément d'identification du terminal (1) destinataire. Ce dispositif de vérification (2) comprend également un moyen d'investigation (2a3) dans au moins une base de données stockée dans un moyen de mémorisation. Cette base de données (2a2) étant principalement formée par une table de correspondance entre un numéro d'identification du terminal (1) destinataire de l'information et une autorisation ou une interdiction de réception de l'élément d'identification de l'opérateur du numéro d'appel du correspondant au niveau du terminal (1). Le dispositif de vérification (2) comprend encore un moyen de transfert (2c) du signal vérifié en fonction du résultat de la vérification. Ce moyen de transfert (2c) est alors relié via le réseau (9) à au moins un terminal (1) destinataire d'un signal d'information, soit directement, soit via un autre élément du système formé par un dispositif de ségrégation (3).

Ce dispositif de ségrégation (3) est destiné à supprimer les éléments d'identification de l'opérateur d'un correspondant parmi les différentes informations qui composent le signal transmis à destination d'un terminal (1) qui n'est pas autorisé à recevoir cet élément d'identification. Ce dispositif de ségrégation (3) comprend notamment d'une part un moyen de reconnaissance (3a) de l'élément d'identification de l'opérateur du numéro d'appel d'un correspondant dans la séquence d'information du signal, et d'autre part un moyen d'élimination (3b) de la séquence reconnue qui correspond à l'élément d'identification de l'opérateur du correspondant. Le dispositif de ségrégation (3) comprend également un moyen de transfert (3c) du signal modifié vers le terminal (1) auquel il est destiné, via le réseau (9) du système.

Selon une variante de réalisation, le dispositif de filtrage se trouve intégré dans le terminal (1) destinataire du signal transmis. Le dispositif de vérification (2) et le dispositif de ségrégation (3) sont alors formés par des applications et/ou des interfaces disposées entre un moyen de réception des informations transmises par le réseau (9) et une application du terminal (1) destinée à la gestion du signal réceptionné et filtré. Alors que le dispositif de ségrégation (3) situé au niveau du terminal (1) comprend les mêmes éléments que le dispositif de ségrégation (3) situé au niveau du réseau (9), le dispositif de vérification (2), lui, diffère. En effet, le dispositif de vérification (2) intégré dans un terminal (1) d'utilisateur du système comprend alors au moins un moyen de reconnaissance (2b1) d'un élément d'identification de l'opérateur du numéro d'appel d'un correspondant et une application (2b2) paramétrée par l'opérateur du terminal (1) de l'utilisateur et destinée à autoriser ou interdire la récupération et/ou l'utilisation de l'élément d'identification de l'opérateur du numéro d'appel d'un correspondant par une autre application ou un autre interface que le dispositif de ségrégation (3) du terminal (1). Le dispositif de vérification (2) comprend également un moyen de transfert (2c) du signal vérifié vers le dispositif de ségrégation (3) ou vers une autre application ou interface du terminal (1) de l'utilisateur.

Selon un mode de réalisation particulier, l'élément d'identification du numéro d'appel de l'opérateur d'un correspondant est transmis dans une séquence d'informations d'un signal qui comprend notamment un élément d'identification du numéro d'appel du correspondant et/ou un élément d'identification du terminal du correspondant. Ces différentes données se trouvent alors assemblées dans une même séquence d'informations qui inclut un en-tête d'encapsulation. Cet en-tête permet de définir la position de chacune des informations contenues dans la capsule que vient former la séquence des informations intégrant les différents éléments d'identification.

Selon un mode de réalisation particulier, l'élément d'identification de l'opérateur du numéro d'appel du correspondant est formé par un code de type P.L.M.N. (*Public Land Mobile Network*) propre à chaque opérateur de réseau de téléphonie mobile, ou de type P.S.T.N. (*Public Switched Telephone Network*) propre aux opérateurs de réseau de téléphonie fixe, ou bien encore de type VoIP (Voice over Internet Protocol) dans le cas de fournisseur d'accès Internet proposant un service de téléphonie. Ce code peut alors être associé au code M.S.I.S.D.N. (*Mobile Station Integrated Services Digital Network*) utilisé dans certains systèmes de fonctionnement de la fonction C.L.I.P. (*Calling Line Identification Presentation*) lors de l'affichage du numéro d'appel d'un correspondant lorsque celui-ci tente d'établir une communication avec le terminal (1) d'un utilisateur.

Lorsque l'élément d'identification de l'opérateur du numéro d'appel du correspondant est intégré à une séquence d'informations formant une capsule, le dispositif de ségrégation (3) doit alors comprendre un moyen (3d) permettant de dés-encapsuler et de ré-encapsuler la séquence d'informations pour pouvoir notamment éliminer la séquence que le terminal n'est pas autorisé à recevoir puis transférer les informations restantes.

Au niveau du terminal (1) de l'utilisateur, destinataire de l'élément d'identification de l'opérateur d'un correspondant, une application logicielle (4) vient gérer le traitement du signal reçu, une fois que celui-ci est vérifié et/ou modifié. Selon un mode de réalisation préféré, l'application logicielle (4) est formée par une application S.T.K. (Sim Tool Kit) stockée dans la carte Sim du terminal (1).

L'application (4) se trouve ainsi connectée à plusieurs applications et/ou interfaces, et notamment à un dispositif d'affichage (8). Le terminal (1) comprend également un moyen d'investigation (5a) dans une base de données comprenant au moins une table de correspondance (5b) entre un élément d'identification d'un opérateur et un identifiant de l'opérateur destiné à être affiché. Le terminal (1) comprend également un moyen d'enregistrement (6a) dans un moyen de stockage comprenant une base de données avec au moins une table de correspondance entre le numéro d'appel du terminal d'un correspondant et un élément d'identification de l'opérateur du numéro d'appel du terminal du correspondant, ou bien encore une table de correspondance entre un élément d'identification du terminal d'un correspondant et un élément d'identification de l'opérateur du numéro d'appel du terminal du correspondant. Les moyens de stockage pour la mémorisation de ces différentes bases de données peuvent être intégrés au terminal (1) ou bien y être simplement associés comme par exemple avec des mémoires amovibles (SD Card, Clé USB, Flash Memory ou RAM).

De plus, comme pour le dispositif de ségrégation (3), le terminal (1) peut également intégrer un moyen (7) permettant de dés-encapsuler la séquence d'informations qui comprend l'élément d'identification de l'opérateur du terminal du correspondant. Par ailleurs, ce moyen (7) doit également permettre de décoder et/ou encoder l'élément d'identification de façon à le rendre utilisable par les applications et/ou les interfaces du terminal (1) de l'utilisateur ainsi que pour permettre son affichage.

Le procédé de fonctionnement du système de l'invention implique avant tout une étape (S1) d'émission d'un signal à destination du terminal (1) d'un utilisateur via un réseau (9), le signal ayant la particularité de comprendre au moins un élément d'identification de l'opérateur du numéro d'appel d'un correspondant. Ce signal subit alors au moins un filtrage avant d'atteindre l'application logicielle (4) du terminal (1) auquel il est destiné.

Lorsque le dispositif de filtrage se trouve situé sur le réseau (9), la vérification (S2) du signal comprend une première étape d'identification (S2a1) d'une part du terminal destinataire du signal et d'autre part de la présence d'un élément d'identification de l'opérateur d'un numéro d'appel dans la séquence d'information du signal. Une fois cette identification (S2a1) réalisée, une application du dispositif de vérification (2) contrôle (S2a2) l'autorisation de transmettre l'élément d'identification de l'opérateur au terminal (1) destinataire, grâce à une table de correspondance entre un élément d'identification du terminal destinataire et une autorisation ou une interdiction de transmission de l'élément d'identification de l'opérateur du correspondant au terminal destinataire. Lorsque le résultat de la vérification (S2a2) dans la table de correspondance montre une autorisation, le signal est transmis (S3b) au terminal (1) de l'utilisateur via le réseau (9). Dans le cas contraire, le signal se trouve transféré (S3a) au dispositif de ségrégation (3).

Lorsque le dispositif de filtrage se trouve intégré au terminal (1) de l'utilisateur, la vérification (S2) du signal comprend une première étape d'identification (S2b1) de la présence d'un élément d'identification de l'opérateur d'un numéro d'appel dans la séquence d'information du signal. Suit alors une étape d'autorisation ou d'interdiction (S2b2) de la récupération et/ou de l'utilisation de l'élément d'identification de l'opérateur du terminal du numéro d'appel par une application ou une interface autre que le dispositif de ségrégation (3) du terminal (1) de l'utilisateur, cette étape d'autorisation/interdiction se trouvant alors réalisée par une application (2b2) directement paramétrée par l'opérateur. Là aussi, lorsque l'application fournit une autorisation, le signal se trouve transmis (S3b) au terminal (1) de l'utilisateur via le réseau (9), et inversement, lorsque l'application interdit la transmission de l'élément d'identification de l'opérateur au terminal (1), le signal est transféré (S3a) au dispositif de ségrégation (3).

Au niveau du dispositif de ségrégation (3), le procédé est identique quel que soit le positionnement du dispositif (3), sur le réseau (9) ou intégré au terminal (1). La ségrégation (S4) du signal comprend une reconnaissance (S4a) de la séquence d'informations du signal qui correspond à l'élément d'identification de l'opérateur du numéro du terminal d'un correspondant. Une fois cette séquence particulière identifiée (S4a), celle-ci est retirée (S4b) du reste de la séquence d'informations avant que le signal restant ne soit transmis (S4c) au terminal (1) de l'utilisateur destinataire du signal.

Selon un mode de déroulement particulier du procédé réalisé lorsque la séquence d'informations comprend plusieurs éléments, par exemple d'identifications, regroupés et que cette séquence forme une capsule accompagnée d'un en-tête d'encapsulation, la ségrégation (S4) comprend une dés-encapsulation (S4a1) de la séquence d'informations qui est réalisée avant l'élimination (S4b) de l'élément d'identification de l'opérateur et une ré-encapsulation (S4a2) du signal qui est effectuée avant le transfert du signal (S4c) vers le terminal (1), une fois l'élément d'identification de l'opérateur retiré (S4b).

Une fois que le signal se trouve réceptionné au niveau du terminal (1) et que ce signal a été vérifié, le procédé présente plusieurs variantes.

Lorsque l'élément d'identification de l'opérateur qui fait partie du signal forme un identifiant susceptible d'être utilisé en l'état par une application et/ou une interface d'affichage (8), le procédé comprend simplement une reconnaissance (S5a) de l'élément d'identification de l'opérateur du numéro d'appel d'un correspondant, puis un affichage (S6) de l'élément réceptionné. Ce procédé simplifié n'est possible que si l'identifiant présente un volume assez réduit, c'est-à-dire de l'ordre de grandeur de l'élément d'identification, pour pouvoir être transmis facilement par le réseau (3).

Selon un mode particulier du déroulement du procédé, l'affichage de l'identifiant peut nécessiter une dés-encapsulation (S5a1) de la séquence du signal qui correspond à l'élément d'identification de l'opérateur, voire un décodage et/ou un encodage (S5a2) de l'élément d'identification afin de le rendre adapté pour une récupération et/ou une utilisation par les au moins une des différentes applications et/ou interfaces du terminal (1) de l'utilisateur.

Lorsque l'identifiant destiné à être affiché est déjà présent dans une mémoire intégré ou associé au terminal (1), le déroulement du procédé comprend alors une étape d'investigation (S5b) au niveau d'au moins une table de correspondance entre des éléments d'identification d'opérateurs et des identifiants d'opérateur destinés à être affichés afin de déterminer quel est l'identifiant d'opérateur correspondant à l'élément d'identification transmis par le signal. Une fois l'identifiant défini, il peut alors être affiché (S6).

Il est parfaitement évident que lorsque le signal vérifié et réceptionné au niveau du terminal (1) de l'utilisateur comprend à la fois un élément d'identification de l'opérateur du numéro d'appel du terminal d'un correspondant et un élément d'identification du numéro d'appel du terminal du même correspondant et/ou un élément d'identification du terminal du correspondant, les identifiants respectifs de chacun de ces éléments d'identification peuvent alors être affichés simultanément. De même, lorsque l'élément d'identification de l'opérateur du numéro d'appel du terminal du correspondant est retiré de la séquence d'information par le dispositif de ségrégation, seuls les identifiants restants sont affichés par le terminal (1) destinataire.

De plus, lorsque l'élément d'identification de l'opérateur du numéro d'appel du terminal d'un correspondant et un élément d'identification du numéro d'appel du terminal du même correspondant ou un élément d'identification du terminal du même correspondant sont intégrés à un même signal vérifié et réceptionné ou bien réceptionnés simultanément au niveau du terminal (1) de l'utilisateur, ces éléments d'identification et/ou leurs identifiants respectifs sont mémorisés (S5c) au niveau d'une table de correspondance entre ces différents éléments d'identification (opérateur, numéro d'appel et/ou terminal) dans un format adapté pour un stockage dans une table de mémorisation. De même, une vérification (S5d1) de la correspondance dans la base de données est effectuée pour voir si l'élément d'identification de l'opérateur et/ou du numéro d'appel du terminal et/ou du terminal du correspondant ou l'identifiant respectif a changé. Si un de ces éléments d'identification a changé, la table de correspondance est alors, elle aussi, modifiée (S5d2) en conséquence.

La mise à jour de certaines des bases de données du système (5b) ou de l'application d'autorisation (2b2) paramétrée par l'opérateur peut être effectuée selon différentes méthodes.

Une première possibilité de mise à jour consiste à utiliser les données transmises par le signal vérifié et réceptionné au niveau du terminal (1). Ce signal intègre alors d'une part un élément d'identification d'un opérateur, spécifique du numéro d'appel d'un correspondant ou non, et d'autre part le nouvel identifiant correspondant à l'élément d'identification. Si l'opérateur est nouveau et n'existe pas encore dans la table de correspondance, l'élément d'identification de l'opérateur et le nouvel identifiant de l'opérateur sont alors mémorisés dans la table de correspondance de la base de données du terminal (1). En revanche, si l'opérateur n'est pas nouveau et se trouve déjà dans la table de correspondance mais que l'identifiant est nouveau, par exemple parce qu'il a été modifié, la table de correspondance est modifiée afin que la correspondance entre l'élément d'identification de l'opérateur et le nouvel identifiant de l'opérateur soit mise à jour.

Une seconde possibilité fait intervenir un dispositif de programmation OTA (*Over the Air*) connu qui consiste en l'envoi d'un applet de mise à jour au terminal (1) depuis un serveur centralisé par un réseau du système. L'envoi de cet applet de mise à jour est déclenché une fois que le terminal (1) a pu être identifié selon une méthode quelconque (envoi d'un SMS, appel d'un opérateur, etc.).

Une troisième possibilité fait intervenir un dispositif SMS-CB (*Short Message Service Cell Broadcast*) qui permet d'effectuer une mise à jour automatique des données ou applications du terminal (1) lorsqu'elle est considérée nécessaire. La nécessité d'une mise à jour est déterminée par la norme SMS-CB en fonction des informations déjà chargées dans le cadre d'un premier envoi vers le terminal abonné au canal SMS-CB en charge de la diffusion des informations relatives aux codes et/ou pictogrammes des opérateurs pour un territoire donné. L'homme de métier comprend qu'une diffusion des informations sur l'ensemble des cellules d'un territoire donnée est nécessaire pour mettre en oeuvre le procédé et permet au terminaux abonnés au canal de diffusion CB auquel elle correspond de pouvoir bénéficier des informations les plus récentes d'une part et de la fonction de détermination du caractère récent des informations décrites dans la norme SMS-CB d'autre part.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de gestion de l'identification de l'opérateur d'au moins un numéro d'appel d'un correspondant de l'utilisateur d'un terminal (1), dit destinataire, connecté à au moins un réseau (9) de communication et/ou de signalisation utilisant, par exemple, un protocole de type SS7, **caractérisé en ce que** :
• le système comprend au moins un ensemble de filtrage d'au moins un signal d'informations transmis lors de l'établissement d'une communication téléphonique, cet ensemble de filtrage étant embarqué dans le terminal (1) destinataire ou implémenté dans le réseau (9) et comprenant :
∘ au moins un dispositif de vérification (2) analysant le signal transmis et comportant :
- un premier moyen de reconnaissance (2a1) d'au moins un élément d'identification de l'opérateur du numéro d'appel du correspondant, dans le signal transmis,
- un moyen de vérification de l'autorisation de la réception et/ou l'utilisation dudit élément d'identification de l'opérateur du numéro d'appel du correspondant par le terminal (1) destinataire, et
- au moins un moyen de transfert (2c) du signal vérifié, du dispositif (2) de vérification vers un dispositif (3) de ségrégation d'information ou vers une application du terminal (1) destinataire,
∘ un dispositif de ségrégation (3) dudit élément d'identification de l'opérateur du numéro d'appel du correspondant dans le signal transmis, ce dispositif de ségrégation (3) comprenant
- un second moyen de reconnaissance (3a) dudit élément d'identification de l'opérateur du numéro d'appel du correspondant dans le signal vérifié reçu du dispositif (2) de vérification, et
- un moyen d'élimination (3b), dans le signal, de l'élément d'identification de l'opérateur du correspondant reconnu,
• le terminal destinataire (1) comprend au moins un dispositif d'affichage (8) et au moins une application logicielle (4) destinée au moins à la récupération et/ou à l'affichage d'un identifiant de l'opérateur à partir dudit élément d'identification de l'opérateur du numéro d'appel du correspondant et en fonction de l'autorisation vérifiée par le dispositif (2) de vérification et/ou de l'élimination réalisée par le dispositif (3) de ségrégation.

2. Système de gestion selon la revendication 1, **caractérisé en ce que** l'information transmise comprenant un élément d'identification de l'opérateur du numéro d'appel du terminal du correspondant est associée à un élément d'identification du numéro d'appel du terminal du correspondant et/ou un élément d'identification du terminal du correspondant et/ou un élément d'identification du terminal (1) destinataire.

3. Système de gestion selon la revendication 2, **caractérisé en ce que** les informations transmises avec l'élément d'identification de l'opérateur sont regroupées dans une même séquence d'informations comprenant un en-tête d'encapsulation.

4. Système de gestion selon une des revendications précédentes, **caractérisé en ce que** les dispositifs de vérification (2) et de ségrégation (3) de l'ensemble de filtrage, sont situés sur un réseau (9) utilisé pour la transmission d'au moins un élément d'identification.

5. Système de gestion selon une des revendications précédentes, **caractérisé en ce que** le dispositif de vérification (2) est situé sur le réseau au niveau d'un H.L.R. (*Home Location Register*) et que le dispositif de ségrégation (3) vient se situer au niveau d'un I.N. (*intelligent Network*).

6. Système de gestion selon une des revendications précédentes, **caractérisé en ce que** le moyen de vérification de l'autorisation, dans le dispositif de vérification (2), comprend au moins un moyen d'investigation (2a3) dans au moins une base de données (2a2) comprenant une table de correspondance entre un numéro d'identification du terminal destinataire et une autorisation de réception dudit l'élément d'identification de l'opérateur du numéro d'appel du correspondant.

7. Système de gestion selon une des revendications 1 à 3, **caractérisé en ce que** les dispositifs de vérification (2) et de ségrégation (3) de l'ensemble de filtrage sont situés au niveau du terminal (1) destinataire, le moyen de vérification de l'autorisation, dans le dispositif de vérification (2) comprenant au moins une application destinée à autoriser ou interdire la récupération et/ou l'utilisation de l'élément d'identification de l'opérateur du numéro d'appel d'un correspondant par une autre application ou un autre interface que le dispositif de ségrégation (3) du terminal (1) destinataire.

8. Système de gestion selon une des revendications précédentes, **caractérisé en ce que** le second moyen de reconnaissance, intégré dans le dispositif de ségrégation (3), reconnait l'élément d'identification de l'opérateur du numéro d'appel du terminal d'un correspondant susceptible d'être intégré dans une séquence d'informations comprenant au moins un élément d'identification, et le moyen d'élimination (3b) supprime cet élément reconnu.

9. Système de gestion selon une des revendications précédentes, **caractérisé en ce que** l'application logicielle (4) destinée au moins à la récupération de l'élément d'identification de l'opérateur du numéro d'appel du terminal du correspondant au niveau du terminal destinataire du signal d'informations est une application S.T.K. (*Sim Tool Kit*).

10. Système de gestion selon une des revendications précédentes, **caractérisé en ce que** l'application logicielle (4) destinée au moins à la récupération de l'élément d'identification de l'opérateur du numéro d'appel du terminal du correspondant, gère au moins un moyen d'investigation (5a) dans un moyen de mémoire intégré ou associé au terminal de l'utilisateur destinataire du signal, le moyen de mémoire comprenant au moins une table de correspondance (5b) entre des éléments d'identification d'opérateurs et des identifiants destinés à être affichés.

11. Système de gestion selon une des revendications précédentes, **caractérisé en ce qu'**au moins le terminal (1) destinataire ou le dispositif de ségrégation (3) comprennent au moins un moyen (7) de dés-encapsulation et/ou de ré-encapsulation, de décodage et/ou d'encodage d'au moins une partie de l'élément d'identification de l'opérateur du numéro d'appel du terminal du correspondant afin qu'au moins une application et/ou une interface du terminal (1) destinataire et/ou du dispositif de ségrégation (3) puissent utiliser l'élément d'identification de l'opérateur du numéro d'appel du terminal du correspondant.

12. Système de gestion selon une des revendications précédentes, **caractérisé en ce que** le terminal (1) destinataire comprend un moyen de mémorisation (6a) qui intègre au moins une base de données (6b) comprenant une correspondance entre au moins un élément d'identification de l'opérateur du numéro d'appel du terminal d'un correspondant, un élément d'identification du numéro d'appel du terminal du même correspondant et/ou un élément d'identification du terminal du même correspondant dans une base de données, les éléments d'identification respectifs étant adaptés à un stockage dans la mémoire du moyen de mémorisation.

13. Procédé de gestion de l'identification de l'opérateur d'au moins un numéro d'appel d'un correspondant de l'utilisateur d'un terminal (1), dit destinataire, connecté à au moins un réseau (9), le procédé mettant en jeu un système de gestion selon l'une des revendications précédentes et comprenant au moins :
- une étape de vérification (S2) d'un signal d'informations reçu lors de l'établissement d'une communication téléphonique comprenant au moins l'élément d'identification de l'opérateur du numéro d'appel du correspondant au niveau d'un ensemble de filtrage comportant un dispositif de ségrégation (3) et un dispositif de vérification (2) comprenant un premier moyen de reconnaissance du signal (2a1) analysant le signal pour une reconnaissance dudit élément d'identification, un moyen de vérification pour une vérification de l'autorisation de la réception et/ou l'utilisation dudit élément d'identification par le terminal (1) destinataire et un moyen de transfert (2c) dudit signal vérifié, en fonction de l'autorisation, et
- lorsque l'autorisation est infirmée, une étape de transfert (S3a), par ledit moyen de transfert (2c) du dispositif de vérification (2), du signal vérifié vers le dispositif de ségrégation (3) comprenant un second moyen de reconnaissance (3a) dudit élément d'identification, pour une reconnaissance (S4a) de cet élément, et un moyen d'élimination (3b) pour une élimination (S4b) de l'élément d'identification reconnu, et un moyen de transfert (3c) du signal pour le transfert du signal vers le terminal (1) destinataire, ou
- lorsque l'autorisation est confirmée, une étape de transfert (S3b) du signal vers une application (4) du terminal (1) de l'utilisateur, gérant la récupération et/ou à l'affichage d'un identifiant de l'opérateur, à partir dudit élément d'identification de l'opérateur du numéro d'appel du correspondant et en fonction de l'autorisation vérifiée par le dispositif (2) de vérification et de l'élimination réalisée par le dispositif (3) de ségrégation.

14. Procédé de gestion selon la revendication 13, **caractérisé en ce que**, l'ensemble de filtrage étant implémenté dans le réseau (9) du système, l'étape de vérification (S2) comprend :
- une étape de reconnaissance (S2a1) d'un élément d'identification du terminal (1) destinataire du signal,
- une étape de détermination (S2a2) d'une autorisation de transmission dudit élément d'identification au terminal destinataire faisant intervenir un moyen d'investigation dans une base de données (2a2) intégrant au moins une table de correspondance entre un élément d'identification du terminal (1) destinataire et une autorisation ou une interdiction de transmission de l'élément d'identification de l'opérateur du correspondant au terminal (1) destinataire,
- une étape de transmission (S3a) du signal vers un dispositif de ségrégation (3) dans le cas d'une interdiction de transmission, ou
- une étape de transmission (S3b) du signal vers une application du terminal (1) de l'utilisateur, destinataire du signal, dans le cas d'une autorisation de transmission.

15. Procédé de gestion selon la revendication 13, **caractérisé en ce que**, l'ensemble de filtrage étant intégré au terminal (1) de l'utilisateur, l'étape de vérification (S2) comprend :
- une étape de reconnaissance (S2b1) d'au moins un élément d'identification de l'opérateur du numéro d'appel du terminal du correspondant,
- une étape d'autorisation ou d'interdiction (S2b2), par une première application du terminal (1) destinataire, paramétrée pour autoriser ou interdire la récupération et/ou l'utilisation de l'élément d'identification de l'opérateur du numéro d'appel du terminal d'un correspondant par une autre application ou un autre interface que le dispositif de ségrégation (3) du terminal (1),
- une étape de transmission (S3a) du signal vers un dispositif de ségrégation (3) dans le cas d'une interdiction de transmission, ou
- une étape de transmission (S3b) du signal vers une seconde application du terminal (1) de l'utilisateur, destinataire du signal, dans le cas d'une autorisation de transmission.

16. Procédé de gestion selon une des revendications précédentes, **caractérisé en ce que**, lorsque le signal vérifié est transféré au dispositif de ségrégation (3), le procédé comprend :
- une étape de reconnaissance (S4a) d'au moins un élément d'identification de l'opérateur du numéro d'appel du terminal du correspondant dans le signal,
- une étape d'élimination (S4b) de l'élément d'identification de l'opérateur du numéro d'appel du correspondant,
- une étape de transfert (S4c) du signal restant vers une application du terminal (1) de l'utilisateur, destinataire du signal.

17. Procédé de gestion selon la revendication 16, **caractérisé en ce que**, l'élément d'identification de l'opérateur du terminal du correspondant étant regroupé avec au moins un autre élément d'identification du correspondant dans une même séquence d'information comprenant un en-tête d'encapsulation, le procédé comprend :
- une étape de dés-encapsulation (S4a1) du signal qui est réalisée avant l'élimination (S4b) de l'élément d'identification de l'opérateur du numéro d'appel du terminal d'un correspondant,
- une étape de ré-encapsulation (S4b1) du signal qui est réalisée une fois que l'élimination (S4b) de l'élément d'identification de l'opérateur du numéro d'appel du terminal d'un correspondant est terminée et avant que le signal (S4c) ne soit transféré.

18. Procédé de gestion selon une des revendications précédentes, **caractérisé en ce que**, lorsque le signal est vérifié et que le terminal (1) destinataire est autorisé à utiliser ledit élément d'identification de l'opérateur du numéro d'appel du terminal d'un correspondant l'application (4) de gestion de ce terminal (1) destinataire met en oeuvre :
- une étape de reconnaissance (S5a) d'au moins un élément d'identification de l'opérateur du numéro d'appel du terminal du correspondant dans le signal,
- une étape d'affichage (S6) de l'identifiant de l'opérateur.

19. Procédé de gestion selon la revendication 18, **caractérisé en ce que**, l'élément d'identification de l'opérateur du correspondant étant regroupé avec au moins un autre élément d'identification du correspondant dans une même séquence d'information comprenant un en-tête d'encapsulation, le procédé comprend :
- une étape de dés-encapsulation (S5a1) du signal, et/ou
- une étape de décodage et/ou d'encodage (S5a2) de l'élément d'identification de l'opérateur du numéro d'appel du terminal d'un correspondant de façon à obtenir un identifiant de l'opérateur adapté pour être utilisé par au moins une application et/ou une interface du terminal (1) destinataire.

20. Procédé de gestion selon une des revendications 18 à 19, **caractérisé en ce que** le procédé comprend :
- une étape d'investigation (S5b) dans au moins une base de données (5b) qui comprend au moins une table de correspondance entre des éléments d'identification d'opérateurs et des identifiants destinés à être affichés.

21. Procédé de gestion selon une des revendications 18 à 20, **caractérisé en ce que**, le signal étant reçu au niveau d'une application du terminal et comportant au moins un élément d'identification de l'opérateur du numéro d'appel du terminal d'un correspondant et au moins un élément d'identification du numéro d'appel du terminal du même correspondant, le procédé comprend :
- une étape de mémorisation (S5c) de la correspondance entre l'élément d'identification de l'opérateur du numéro d'appel du terminal d'un correspondant et l'élément d'identification du numéro d'appel du terminal du correspondant dans une base de données (6b), les éléments d'identification respectifs étant adaptés à un stockage dans un moyen de mémorisation.

22. Procédé de gestion selon une des revendications 18 à 20, **caractérisé en ce que**, le signal d'informations étant reçu au niveau d'une application du terminal et comportant au moins un élément d'identification de l'opérateur du numéro d'appel du terminal d'un correspondant et au moins un élément d'identification du numéro d'appel du terminal du même correspondant et/ou au moins un élément d'identification du terminal du même correspondant, le procédé comprend :
- une étape de vérification (S5d1) dans une base de données (6b) que la correspondance entre ces différents éléments d'identification est identique,
- une étape de modification (S5d2) de la correspondance dans la base de données (6b) entre les différents éléments d'identification en fonction de la nouvelle correspondance fournie par le signal d'informations.

23. Procédé de gestion selon la revendication 14 ou 20, **caractérisé en ce que**, le procédé comprend une étape de mise à jour d'au moins une table de correspondance du terminal de l'utilisateur entre des éléments d'identification d'opérateurs et des identifiants destinés à être affichés qui comprend :
- une étape de réception d'un signal comprenant au moins un élément d'identification de l'opérateur du numéro d'appel d'un correspondant associé à un nouvel identifiant à afficher,
- une étape de mémorisation dans la table de correspondance de l'élément d'identification de l'opérateur et du nouvel identifiant de l'opérateur correspondant, lorsque l'opérateur n'existe pas encore dans la table de correspondance, ou
- une étape de modification de la table de correspondance au niveau de la correspondance entre l'élément d'identification de l'opérateur et le nouvel identifiant de l'opérateur correspondant, lorsque l'opérateur existe déjà dans la table de correspondance et que l'identifiant est nouveau.

## Patentansprüche

1. System zum Verwalten der Identifikation des Betreibers von wenigstens einer Rufnummer eines Teilnehmers des Benutzers eines Endgeräts (1), Empfänger genannt, verbunden mit wenigstens einem Kommunikationsnetz (9) und einem Signalisierungsnetz, das zum Beispiel ein Protokoll des Typs SS7 benutzt, **dadurch gekennzeichnet, dass**:
• das System wenigstens eine Einheit zum Filtern von wenigstens einem Informationssignal umfasst, das beim Einrichten einer Telefonkommunikation übertragen wird, wobei diese Filtereinheit in einem Empfangsendgerät (1) montiert oder in dem Netz (9) implementiert ist und Folgendes umfasst:
∘ wenigstens eine Verifikationsvorrichtung (2) zum Analysieren des gesendeten Signals, die Folgendes umfasst:
- ein erstes Erkennungsmittel (2a1) von wenigstens einem Identifikationselement des Betreibers der Rufnummer des Teilnehmers in dem gesendeten Signal,
- ein Mittel zum Verifizieren der Autorisierung des Empfangs und/oder der Nutzung des Identifikationselements des Betreibers der Rufnummer des Teilnehmers durch das Empfangsendgerät (1), und
- wenigstens ein Mittel (2c) zum Übertragen des verifizierten Signals der Verifikationsvorrichtung (2) zu einer Informationstrennvorrichtung (3) oder zu einer Anwendung des Empfangsendgeräts (1),
∘ eine Vorrichtung (3) zum Trennen des Identifikationselements des Betreibers der Rufnummer des Teilnehmers in dem gesendeten Signal, wobei diese Trennvorrichtung (3) Folgendes umfasst:
- ein zweites Mittel (3a) zum Erkennen des Identifikationselements des Betreibers der Rufnummer des Teilnehmers in dem von der Verifikationsvorrichtung (2) empfangenen verifizierten Signal, und
- ein Mittel (3b) zum Eliminieren, in dem Signal, des Identifikationselements des Betreibers des erkannten Teilnehmers,
• das Empfangsendgerät (1) wenigstens eine Anzeigevorrichtung (8) und wenigstens eine Softwareanwendung (4) umfasst, bestimmt wenigstens zum Wiederherstellen und/oder Anzeigen eines Identifikators des Betreibers anhand des Identifikationselements des Betreibers der Rufnummer des Teilnehmers und in Abhängigkeit von der von der Verifikationsvorrichtung (2) verifizierten Autorisierung und/oder der durch die Trennvorrichtung (3) realisierten Eliminierung.

2. Verwaltungssystem nach Anspruch 1, **dadurch gekennzeichnet, dass** die gesendete Information, die ein Identifikationselement des Betreibers der Rufnummer des Endgeräts des Teilnehmers umfasst, mit einem Identifikationselement der Rufnummer des Endgeräts des Teilnehmers und/oder einem Identifikationselement des Endgeräts des Teilnehmers und/oder einem Identifikationselement des Empfangsendgeräts (1) assoziiert ist.

3. Verwaltungssystem nach Anspruch 2, **dadurch gekennzeichnet, dass** die mit dem Identifikationselement des Betreibers gesendeten Informationen zu einer selben Informationssequenz gruppiert werden, die einen Verkapselungskopf umfasst.

4. Verwaltungssystem nach einem der vorherigen Ansprüche, **dadurch gekennzeichnet, dass** sich die Verifikations- (2) und Trenn- (3) Vorrichtungen der Filtereinheit auf einem Netz (9) befinden, das zum Senden von wenigstens einem Identifikationselement benutzt wird.

5. Verwaltungssystem nach einem der vorherigen Ansprüche, **dadurch gekennzeichnet, dass** sich die Verifikationsvorrichtung (2) auf dem Netz in einem HLR *(Home Location Register)* befindet und die Trennvorrichtung (3) sich auf einem IN (*Intelligent Network*) befindet.

6. Verwaltungssystem nach einem der vorherigen Ansprüche, **dadurch gekennzeichnet, dass** das Mittel zum Verifizieren der Autorisierung, in der Verifikationsvorrichtung (2), wenigstens ein Untersuchungsmittel (2a3) in wenigstens einer Datenbank (2a2) umfasst, umfassend eine Korrespondenztabelle zwischen einer Identifikationsnummer des Empfangsendgeräts und einer Empfangsautorisierung des Identifikationselements des Betreibers der Rufnummer des Teilnehmers.

7. Verwaltungssystem nach einem der Ansprüche 1 bis 3, **dadurch gekennzeichnet, dass** sich die Verifikations- (2) und Trenn- (3) Vorrichtungen der Filtereinheit am Empfangsendgerät (1) befinden, wobei das Mittel zum Verifizieren der Autorisierung, in der Verifikationsvorrichtung (2), wenigstens eine Anwendung beinhaltet, die zum Autorisieren oder Untersagen der Wiederherstellung und/oder Nutzung des Identifikationselements des Betreibers der Rufnummer eines Teilnehmers durch eine andere Anwendung oder eine andere Schnittstelle als die Trennvorrichtung (3) des Empfangsendgeräts (1) bestimmt ist.

8. Verwaltungssystem nach einem der vorherigen Ansprüche, **dadurch gekennzeichnet, dass** das in der Trennvorrichtung (3) integrierte zweite Erkennungsmittel das Identifikationselement des Betreibers der Rufnummer des Endgeräts eines Teilnehmers zum Integrieren in einer wenigstens ein Identifikationselement umfassenden Informationssequenz erkennt und das Eliminierungselement (3b) dieses erkannte Element unterdrückt.

9. Verwaltungssystem nach einem der vorherigen Ansprüche, **dadurch gekennzeichnet, dass** die Softwareanwendung (4), die wenigstens zum Wiederherstellen des Identifikationselements des Betreibers der Rufnummer des Endgeräts des Teilnehmers am Empfangsendgerät des Informationssignals bestimmt ist, eine STK-(*Sim Tool Kit*)-Anwendung ist.

10. Verwaltungssystem nach einem der vorherigen Ansprüche, **dadurch gekennzeichnet, dass** die Softwareanwendung (4), die wenigstens zum Wiederherstellen des Identifikationselements des Betreibers der Rufnummer des Endgeräts des Teilnehmers bestimmt ist, wenigstens ein Untersuchungsmittel (5a) in einem Speichermittel verwaltet, das mit dem Empfangsendgerät des Benutzers des Signals integriert oder assoziiert ist, wobei das Speichermittel wenigstens eine Korrespondenztabelle (5b) zwischen den Identifikationselementen von Betreibern und anzuzeigenden Identifikatoren umfasst.

11. Verwaltungssystem nach einem der vorherigen Ansprüche, **dadurch gekennzeichnet, dass** wenigstens das Empfangsendgerät (1) oder die Trennvorrichtung (3) wenigstens ein Mittel (7) zum Entkapseln und/oder Neuverkapseln, Decodieren und/oder Encodieren wenigstens eines Teils des Identifikationselements des Betreibers der Rufnummer des Endgeräts des Teilnehmers umfasst und wenigstens eine Anwendung und/oder eine Schnittstelle des Empfangsendgeräts (1) und/oder der Trennvorrichtung (3) das Identifikationselement des Betreibers der Rufnummer des Endgeräts des Teilnehmers benutzen kann.

12. Verwaltungssystem nach einem der vorherigen Ansprüche, **dadurch gekennzeichnet, dass** das Empfangsendgerät (1) wenigstens ein Speichermittel (6a) umfasst, das wenigstens eine Datenbank (6b) integriert, die eine Korrespondenz zwischen wenigstens einem Identifikationselement des Betreibers der Rufnummer des Endgeräts eines Teilnehmers, ein Identifikationselement der Rufnummer des Endgeräts desselben Teilnehmers und/oder ein Identifikationselement des Endgeräts desselben Teilnehmers in einer Datenbank umfasst, wobei die jeweiligen Identifikationselemente an einen Speicher im Memory des Speichermittels angepasst sind.

13. Verfahren zum Verwalten der Identifikation des Betreibers von wenigstens einer Rufnummer eines Teilnehmers des Benutzers eines Endgeräts (1), Empfänger genannt, verbunden mit wenigstens einem Netzwerk (9), wobei das Verfahren ein Verwaltungssystem nach einem der vorherigen Ansprüche ausführt und wenigstens Folgendes beinhaltet:
- einen Schritt des Verifizierens (S2) eines Informationssignals, das bei der Einrichtung einer Telefonkommunikation empfangen wurde, umfassend wenigstens ein Identifikationselement des Betreibers der Rufnummer des Teilnehmers an einer Filtereinheit, die eine Trennvorrichtung (3) und eine Verifikationsvorrichtung (2) umfasst, umfassend ein erstes Mittel zum Erkennen des Signals (2a1), das das Signal zum Erkennen des Identifikationselements analysiert, ein Verifikationsmittel zum Verifizieren der Autorisierung des Empfangs und/oder der Nutzung des Identifikationselements durch das Zielendgerät (1) und ein Mittel (2c) zum Übertragen des verifizierten Signals in Abhängigkeit von der Autorisierung, und
- einen Schritt des Übertragens (S3a), wenn die Autorisierung nicht bestätigt wird, durch das Übertragungsmittel (2c) der Verifikationsvorrichtung (2), des verifizierten Signals zu der Trennvorrichtung (3), die ein zweites Mittel (3a) zum Erkennen des Identifikationselements umfasst, zum Erkennen (S4a) dieses Elements, und ein Eliminierungsmittel (3b) zum Eliminieren (S4b) des erkannten Identifikationselements, und ein Mittel (3c) zum Übertragen des Signals zum Übertragen des Signals zu dem Empfangsendgerät (1), oder
- einen Schritt des Übertragens (S3b) des Signals, wenn die Autorisierung bestätigt wird, zu einer Anwendung (4) des Endgeräts (1) des Benutzers, zum Verwalten der Wiederherstellung und/oder Anzeige eines Identifikators des Betreibers auf der Basis des Identifikationselements des Betreibers der Rufnummer des Teilnehmers und in Abhängigkeit von der durch die Verifikationsvorrichtung (2) verifizierten Autorisierung und der durch die Trennvorrichtung (3) realisierten Eliminierung.

14. Verwaltungsverfahren nach Anspruch 13, **dadurch gekennzeichnet, dass** die Filterbaugruppe in dem Netz (9) des Systems implementiert wird, wobei der Verifikationsschritt (S2) Folgendes beinhaltet:
- einen Schritt (S2a1) des Erkennens eines Identifikationselements des Empfangsendgeräts (1) des Signals,
- einen Schritt (S2a2) des Feststellens einer Autorisierung der Sendung des Identifikationselements beim Empfangsendgerät mit Hilfe eines Untersuchungsmittels in einer Datenbank (2a2), die wenigstens eine Korrespondenztabelle zwischen einem Identifikationselement des Empfangsendgeräts (1) und einer Autorisierung oder einer Untersagung des Sendens des Identifikationselements des Betreibers des Teilnehmers beim Empfangsendgerät (1) integriert,
- einen Schritt (S3a) des Sendens des Signals zu einer Trennvorrichtung (3) im Falle einer Sendeuntersagung, oder
- einen Schritt (S3b) des Sendens des Signals zu einer Anwendung des Endgeräts (1) des Benutzers, dem Empfänger des Signals, im Falle einer Sendeautorisierung.

15. Verwaltungsverfahren nach Anspruch 13, **dadurch gekennzeichnet, dass** die Filtereinheit im Endgerät (1) des Benutzers integriert ist, wobei der Verifikationsschritt (S2) Folgendes beinhaltet:
- einen Schritt (S2b1) des Erkennens wenigstens eines Identifikationselements des Betreibers der Rufnummer des Endgeräts des Teilnehmers,
- einen Schritt (S2b2) des Autorisierens oder Untersagens, durch eine erste Anwendung des Empfangsendgeräts (1), parametrisiert zum Autorisieren oder Untersagen der Wiederherstellung und/oder Nutzung des Identifikationselements des Betreibers der Rufnummer des Endgeräts eines Teilnehmers durch eine andere Anwendung oder eine andere Schnittstelle als die Trennvorrichtung (3) des Endgeräts (1),
- einen Schritt (S3a) des Sendens des Signals zu einer Trennvorrichtung (3) im Falle einer Sendeuntersagung, oder
- einen Schritt (S3b) des Sendens des Signals zu einer zweiten Anwendung des Endgeräts (1) des Benutzers, dem Empfänger des Signals, im Falle einer Sendeautorisierung.

16. Verwaltungsverfahren nach einem der vorherigen Ansprüche, **dadurch gekennzeichnet, dass**, wenn das verifizierte Signal zu der Trennvorrichtung (3) übertragen wird, das Verfahren Folgendes beinhaltet:
- einen Schritt (S4a) des Erkennens von wenigstens einem Identifikationselement des Betreibers der Rufnummer des Endgeräts des Teilnehmers in dem Signal,
- einen Schritt (S4b) des Eliminierens des Identifikationselements des Betreibers der Rufnummer des Teilnehmers,
- einen Schritt (S4c) des Übertragens des verbleibenden Signals zu einer Anwendung des Endgeräts (1) des Benutzers, dem Empfänger des Signals.

17. Verwaltungsverfahren nach Anspruch 16, **dadurch gekennzeichnet, dass** das Identifikationselement des Betreibers des Endgeräts des Teilnehmers mit wenigstens einem anderen Identifikationselement des Teilnehmers zu wenigstens einer Informationssequenz gruppiert wird, die einen Verkapselungskopf umfasst, wobei das Verfahren Folgendes beinhaltet:
- einen Schritt (S4a1) des Entkapselns des Signals, der vor dem Eliminieren (S4b) des Identifikationselements des Betreibers der Rufnummer des Endgeräts eines Teilnehmers realisiert wird,
- einen Schritt (S4b1) des Neuverkapselns des Signals, der nach dem Eliminieren (S4b) des Identifikationselements des Betreibers der Rufnummer des Endgeräts eines Teilnehmers und vor dem Übertragen des Signals (S4c) realisiert wird.

18. Verwaltungsverfahren nach einem der vorherigen Ansprüche, **dadurch gekennzeichnet, dass**, wenn das Signal verifiziert ist und das Empfangsendgerät (1) zum Nutzen des Identifikationselements des Betreibers der Rufnummer des Endgeräts eines Teilnehmers autorisiert ist, die Anwendung (4) zum Verwalten dieses Empfangsendgeräts (1) Folgendes ausführt:
- einen Schritt (S5a) des Erkennens von wenigstens einem Identifikationselement des Betreibers der Rufnummer des Endgeräts des Teilnehmers in dem Signal,
- einen Schritt (S6) des Anzeigens des Identifikators des Betreibers.

19. Verwaltungsverfahren nach Anspruch 18, **dadurch gekennzeichnet, dass** das Identifikationselement des Betreibers des Teilnehmers mit wenigstens einem anderen Identifikationselement des Teilnehmers in einer selben Informationssequenz gruppiert wird, die einen Verkapselungskopf umfasst, wobei das Verfahren Folgendes beinhaltet:
- einen Schritt (S5a1) des Entkapselns des Signals, und/oder
- einen Schritt (S5a2) des Decodierens und/oder Encodierens des Identifikationselements des Betreibers der Rufnummer des Endgeräts eines Teilnehmers, um einen Identifikator des Betreibers zu erhalten, ausgelegt zur Nutzung durch wenigstens eine Anwendung und/oder eine Schnittstelle des Empfangsendgeräts (1).

20. Verwaltungsverfahren nach einem der Ansprüche 18 bis 19, **dadurch gekennzeichnet, dass** das Verfahren Folgendes beinhaltet:
- einen Schritt (S5b) des Untersuchens in wenigstens einer Datenbank (5b), die wenigstens eine Korrespondenztabelle zwischen den Identifikationselementen von Betreibern und anzuzeigenden Identifikatoren umfasst.

21. Verwaltungsverfahren nach einem der Ansprüche 18 bis 20, **dadurch gekennzeichnet, dass** das Verfahren, da das Signal an einer Anwendung des Endgeräts empfangen wird und wenigstens ein Identifikationselement des Betreibers der Rufnummer des Endgeräts eines Teilnehmers und wenigstens ein Identifikationselement der Rufnummer des Endgeräts desselben Teilnehmers umfasst, Folgendes beinhaltet:
- einen Schritt (S5c) des Speicherns der Korrespondenz zwischen dem Identifikationselement des Betreibers der Rufnummer des Endgeräts eines Teilnehmers und dem Identifikationselement der Rufnummer des Endgeräts des Teilnehmers in einer Datenbank (6b), wobei die jeweiligen Identifikationselemente an einen Speicher in einem Speichermittel adaptiert sind.

22. Verwaltungsverfahren nach einem der Ansprüche 18 bis 20, **dadurch gekennzeichnet, dass** das Verfahren, da das Informationssignal an einer Anwendung des Endgeräts empfangen wird und wenigstens ein Identifikationselement des Betreibers der Rufnummer des Endgeräts eines Teilnehmers und wenigstens ein Identifikationselement der Rufnummer des Endgeräts desselben Teilnehmers und/oder wenigstens ein Identifikationselement des Endgeräts desselben Teilnehmers umfasst, Folgendes beinhaltet:
- einen Schritt (S5d1) des Verifizierens in einer Datenbank (6b), dass die Korrespondenz zwischen diesen unterschiedlichen Identifikationselementen identisch ist,
- einen Schritt (S5d2) des Modifizierens der Korrespondenz in der Datenbank (6b) zwischen den unterschiedlichen Identifikationselementen in Abhängigkeit von der von dem Informationssignal gelieferten neuen Korrespondenz.

23. Verwaltungsverfahren nach Anspruch 14 oder 20, **dadurch gekennzeichnet, dass** das Verfahren einen Schritt des Aktualisierens von wenigstens einer Korrespondenztabelle des Endgeräts des Benutzers zwischen den Identifikationselementen von Betreibern und den anzuzeigenden Identifikatoren umfasst, das Folgendes beinhaltet:
- einen Schritt des Empfangens eines Signals, umfassend wenigstens ein Identifikationselement des Betreibers der Rufnummer eines mit einem anzuzeigenden neuen Identifikator assoziierten Teilnehmers,
- einen Schritt des Speicherns des Identifikationselements des Betreibers und des neuen Identifikators des entsprechenden Betreibers in der Korrespondenztabelle, wenn der Betreiber noch nicht in der Korrespondenztabelle existiert, oder
- einen Schritt des Modifizierens der Korrespondenztabelle an der Korrespondenz zwischen dem Identifikationselement des Betreibers und dem neuen Identifikator des entsprechenden Betreibers, wenn der Betreiber bereits in der Korrespondenztabelle existiert und der Identifikator neu ist.

## Claims

1. System for management of the identification of the operator of at least one telephone number of a caller of the user of a terminal (1), called the recipient, connected to at least one communication and/or signalling network (9) using, for example, a protocol of SS7 type, **characterised in that**:
• the system comprises at least one filtering system of at least one information signal transmitted on the establishment of a telephonic communication, this filtering system being embedded in the recipient's terminal (1) or implemented in the network (9) and comprising:
∘ at least one verification device (2) analysing the transmitted signal and including:
- a first recognition means (2a1) of at least one identification element of the operator of the telephone number of the caller, in the transmitted signal,
- a means for verification of the authorisation of the reception and/or the use of said identification element of the operator of the telephone number of the caller by the recipient's terminal (1), and
- at least one transfer means (2c) of the verified signal, from the verification device (2) to an information segregation device (3) or to an application of the recipient's terminal (1),
∘ a segregation device (3) of said identification element of the operator of the telephone number of the caller in the transmitted signal, this segregation device (3) comprising
- a second recognition means (3a) of said identification element of the operator of the telephone number of the caller in the verified signal received from the verification device (2), and
- an elimination means (3b), in the signal, of the identification element of the recognised operator of the caller,
• the recipient's terminal (1) comprises at least one display device (8) and at least one software application (4) intended at least for the recovery and/or the display of an identifier of the operator from said identification element of the operator of the telephone number of the caller and as a function of the verified authorisation by the verification device (2) and/or of the elimination, performed by the segregation device (3).

2. Management system according to claim 1, **characterised in that** the transmitted information comprising an element for identification of the operator of the telephone number of the terminal of the caller is associated with an element for identification of the telephone number of the terminal of the caller, and/or an element for identification of the terminal of the caller, and/or an element for identification of the recipient's terminal (1).

3. Management system according to claim 2, **characterised in that** the information transmitted with the element for identification of the operator is grouped together in a same information sequence comprising an encapsulation header.

4. Management system according to one of the preceding claims, **characterised in that** the verification (2) and segregation (3) devices of the filtering system are situated in a network (9) used for the transmission of at least one identification element.

5. Management system according to one of the preceding claims, **characterised in that** the verification device (2) is situated in the network in an H.L.R. *(Home Location Register*) and that the segregation device (3) is situated in an I.N. (*Intelligent Network*).

6. Management system according to one of the preceding claims, **characterised in that** the means for verification of the authorisation, in the verification device (2), comprises at least one investigation means (2a3) in at least one database (2a2) comprising a correspondence table between an identification number of the recipient's terminal and an authorisation of reception of said identification element of the operator of the telephone number of the caller.

7. Management system according to one of claims 1 to 3, **characterised in that** the verification (2) and segregation (3) devices of the filtering system are situated in the recipient's terminal (1), the means for verification of the authorisation, in the verification device (2) comprising at least one application intended to authorise or prohibit the recovery and/or the use of the identification element of the operator of the telephone number of a caller by another application or an interface other than the segregation device (3) of the recipient's terminal (1).

8. Management system according to one of the preceding claims, **characterised in that** the second recognition means, integrated in the segregation device (3), recognises the identification element of the operator of the telephone number of the terminal of a caller able to be integrated in an information sequence comprising at least one identification element, and the elimination means (3b) removes this recognised element.

9. Management system according to one of the preceding claims, **characterised in that** the software application (4) intended at least for the recovery of the identification element of the operator of the telephone number of the terminal of the caller in the terminal of the recipient of the information signal is an S.T.K (*Sim Tool Kit*) application.

10. Management system according to one of the preceding claims, **characterised in that** the software application (4) intended at least for the recovery of the identification element of the operator of the telephone number of the terminal of the caller manages at least one investigation means (5a) in a memory means integrated in or associated with the terminal of the recipient user of the signal, the memory means comprising at least one table of correspondence (5b) between identification elements of operators and identifiers intended to be displayed.

11. Management system according to one of the preceding claims, **characterised in that** at least the recipient's terminal (1) or the segregation device (3) comprise at least one means (7) for de-encapsulation and/or re-encapsulation, for decoding and/or encoding of at least a part of the identification element of the operator of the telephone number of the terminal of the caller, so that at least one application, and/or one interface of the recipient's terminal (1) and/or of the segregation device (3) can use the identification element of the operator of the telephone number of the terminal of the caller.

12. Management system according to one of the preceding claims, **characterised in that** the recipient's terminal (1) comprises a storage means (6a), which integrates at least one database (6b) comprising a correspondence between at least one identification element of the operator of the telephone number of the terminal of a caller, one identification element of the telephone number of the terminal of same caller and/or an identification element of the terminal of the same caller in a database, the respective identification elements being adapted to storage in the memory of the storage means.

13. Process for the management of the identification of the operator of at least one telephone number of a caller of the user of a terminal (1), called the recipient, connected to at least one network (9), the process implementing a management system according to one of the preceding claims, and comprising at least:
- a step of verification (S2) of an information signal received on establishment of a telephonic communication comprising at least the identification element of the operator of the telephone number of the caller in a filtering system including a segregation device (3), and a verification device (2) comprising a first means for recognition of the signal (2a1) analysing the signal for recognition of said identification element, a verification means for verification of the authorisation of the reception and/or the use of said identification element by the recipient's terminal (1) and a transfer means (2c) of said verified signal, as a function of the authorisation, and
- when the authorisation is denied, a step of transfer (S3a), by said transfer means (2c) of the verification device (2), of the verified signal to the segregation device (3) comprising a second recognition means (3a) of said identification element, for recognition (S4a) of this element, and an elimination means (3b) for elimination (S4b) of the recognised identification element, and a means for transfer (3c) of the signal for transfer of the signal to the recipient's terminal (1), or
- when the authorisation is confirmed, a step of transfer (S3b) of the signal to an application (4) of the terminal (1) of the user, managing the recovery and/or the display of an identifier of the operator, from said identification element of the operator of the telephone number of the caller and as a function of the verified authorisation by the verification device (2), and of the elimination performed by the segregation device (3).

14. Management process according to claim 13, **characterised in that**, the filtering system being implemented in the network (9) of the system, the verification step (S2) comprises:
- a step of recognition (S2a1) of an identification element of the terminal (1) of the recipient of the signal,
- a step of determination (S2a2) of an authorisation for transmission of said identification element to the recipient's terminal causing the intervention of an investigation means in a database (2a2) integrating at least one table of correspondence between an identification element of the recipient's terminal (1) and an authorisation or a prohibition of transmission of the identification element of the operator of the caller at the recipient's terminal (1),
- a step of transmission (S3a) of the signal to a segregation device (3) in the case of a prohibition of transmission. or
- a step of transmission (S3b) of the signal to an application of the terminal (1) of the user, the recipient of the signal, in case of authorisation of transmission.

15. Management process according to claim 13, **characterised in that**, the filtering system being integrated in the terminal (1) of the user, the verification step (S2) comprises:
- a step of recognition (S2b1) of at least one identification element of the operator of the telephone number of the terminal of the caller,
- a step of authorisation or prohibition (S2b2), by a first application of the recipient's terminal (1), configured to authorise or prohibit the recovery and/or the use of the identification element of the operator of the telephone number of the terminal of a caller by another application or an interface other than the segregation device (3) of the terminal (1),
- a step of transmission (S3a) of the signal to a segregation device (3) in the case of a prohibition of transmission. or
- a step of transmission (S3b) of the signal to a second application of the terminal (1) of the user, the recipient of the signal, in the case of an authorisation of transmission.

16. Management process according to one of the preceding claims, **characterised in that**, when the verified signal is transferred to the segregation device (3), the process comprises:
- a step of recognition (S4a) of at least one identification element of the operator of the telephone number of the terminal of the caller in the signal,
- a step of elimination (S4b) of the identification element of the operator of the telephone number of the caller,
- a step of transfer (S4c) of the remaining signal to an application of the terminal (1) of the user, the recipient of the signal.

17. Management process according to claim 16, **characterised in that** the identification element of the operator of the terminal of the caller being grouped together with at least one other identification element of the caller in a same information sequence comprising an encapsulation header, the process comprises:
- a step of de-encapsulation (S4a1) of the signal which is performed before the elimination (S4b) of the identification element of the operator of the telephone number of the terminal of a caller,
- a step of re-encapsulation (S4b1) of the signal which is performed once the elimination (S4b) of the identification element of the operator of the telephone number of the terminal of a caller is terminated and before the signal (S4c) is transferred.

18. Management process according to one of the preceding claims, **characterised in that**, when the signal is verified and the recipient's terminal (1) is authorised to use said identification element of the operator of the telephone number of the terminal of a caller, the management application (4) of this recipient's terminal (1) implements:
- a step of recognition (S5a) of at least one identification element of the operator of the telephone number of the terminal of the caller in the signal,
- a step of display (S6) of the identifier of the operator.

19. Management process according to claim 18, **characterised in that** the identification element of the operator of the caller being grouped together with at least one other identification element of the caller in a same information sequence comprising an encapsulation header, the process comprises:
- a step of de-encapsulation (S5a1) of the signal, and/or
- a step of decoding and/or encoding (S5a2) of the identification element of the operator of the telephone number of the terminal of a caller so as to obtain an identifier of the operator adapted to be used by at least one application, and/or an interface of the recipient's terminal (1).

20. Management process according to one of claims 18 to 19, **characterised in that** the process comprises:
- an investigation step (S5b) in at least one database (5b), which comprises at least one table of correspondence between identification elements of operators and identifiers intended to be displayed.

21. Management process according to one of claims 18 to 20, **characterised in that**, the signal being received by an application of the terminal and including at least one identification element of the operator of the telephone number of the terminal of a caller and at least one identification element of the telephone number of the terminal of the same caller, the process comprises:
- a step of storage (S5c) of the correspondence between the identification element of the operator of the telephone number of the terminal of a caller and the identification element of the telephone number of the terminal of the caller in a database (6b), the respective identification elements being adapted to storage in a storage means.

22. Management process according to one of claims 18 to 20, **characterised in that**, the information signal being received by an application of the terminal and including at least one identification element of the operator of the telephone number of the terminal of a caller and at least one identification element of the telephone number of the terminal of the same caller and/or at least one identification element of the terminal of the same caller, the process comprises:
- a step of verification (S5d1) in a database (6b) that the correspondence between these different identification elements is identical,
- a step of modification (S5d2) of the correspondence in the database (6b) between the different identification elements as a function of the new correspondence provided by the information signal.

23. Management process according to claim 14 or 20, **characterised in that** the process comprises a step of updating at least one correspondence table of the terminal of the user between identification elements of operators and identifiers intended to be displayed, which comprises:
- a step of reception of a signal comprising at least one identification element of the operator of the telephone number of a caller associated with a new identifier to be displayed,
- a step of storage in the correspondence table of the identification element of the operator and of the new identifier of the corresponding operator, when the operator does not yet exist in the correspondence table, or
- a step of modification of the correspondence table at the correspondence between the identification element of the operator and the new identifier of the corresponding operator, when the operator already exists in the correspondence table and the identifier is new.
